# EUROPEAN PATENT APPLICATION

(11) **EP 3 223 434 A2**
(43) Date of publication of application: **27.09.2017**
(21) Application number: 17161943.0
(22) Date of filing: 21.03.2017
(51) Int. Cl.: H04B 1/3827

(54) **ELECTRONIC APPARATUS**

(30) Priority: 24.03.2016 JP 2016060491
(71) Applicant: Kyocera Corporation, Kyoto-shi Kyoto 612-8501 (JP)
(72) Inventor: TOGASHI, Daisuke, Kyoto 612-8501 (JP)
(74) Representative: Schwabe - Sandmair - Marx

(57) **Abstract**

An electronic apparatus capable of reducing SAR and, simultaneously, performing a radio communication in an excellent manner is provided. To that end, an electronic apparatus to be worn on the user's head for use includes lenses positioned in front of the user's eyes when the electronic device is worn on the user's head and an array antenna configured with a plurality of antennas formed on surfaces of the lenses.

## Description

### TECHNICAL FIELD

This disclosure relates to an electronic apparatus.

### BACKGROUND

A wearable terminal which may be worn on a user's body for use has recently been popularly used. As the wearable terminal, for example, electronic apparatuses described in PLTs 1 to 3 are known.

### CITATION LIST

### Patent Literature

PLT 1: JP-A-2013-90061
PLT 2: JP-A-11-353444
PLT 3: JP-T-2013-513275

### SUMMARY

A radio communication apparatus worn by a user needs to satisfy that SAR (Specific Absorption Rate) is at a standard value or less. However, since in electronic apparatuses described in the PLTs 1 to 3 an antenna of the radio communication apparatus for transmission and reception of a radio wave is to be positioned in proximity to the user's head, the SAR possibly increases exceeding the standard value. Further, the transmission of the radio wave is interfered by the user's head and therefore is prone to degradation of radio performance.

Accordingly, it could be helpful to provide an electronic apparatus capable of reducing the SAR and, simultaneously, performing a radio communication in an excellent manner.

An electronic apparatus according to one embodiment of the disclosure is an electronic apparatus to be worn on the user's head for use, the electronic apparatus includes a lens positioned in front of a user's eye when the electronic device is worn on the user's head and an array antenna configured with a plurality of antennas formed on a surface of the lens.

The electronic apparatus of the disclosure is capable of reducing SAR and, simultaneously, performing a radio communication in an excellent manner.

### BRIEF DESCRIPTION OF THE DRAWINGS

In the accompanying drawings:
FIG. 1 is a perspective view illustrating an example of a configuration of an electronic apparatus according to one embodiment;
FIG. 2 is a functional block diagram illustrating an example of a circuit configuration of the electronic apparatus according to one embodiment;
FIG. 3 is a conceptual diagram illustrating the electronic apparatus illustrated in FIG. 1 being worn by a user;
FIG. 4 is a schematic diagram of the electronic apparatus illustrated in FIG. 1 viewed in a user's line-of-sight direction;
FIGS. 5A and 5B are schematic diagrams illustrating a line-of-sight detection technology illustrated in FIG. 1;
FIGS. 6A and 6B are conceptual diagrams illustrating an operation of a camera of the electronic apparatus illustrated in FIG. 1;
FIG. 7 is a flowchart of a communication operation of the electronic apparatus illustrated in FIG. 1 based on information on a user's line-of-sight; and
FIG. 8 is a perspective view illustrating a configuration of an electronic apparatus according to Variation 2 of one embodiment.

### DETAILED DESCRIPTION

Hereinafter, one embodiment will be described with reference to the drawings.

### Configuration of Electronic Apparatus

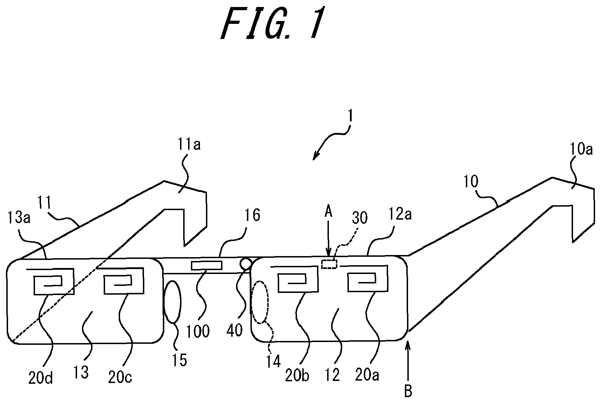

FIG. 1 is a perspective view illustrating an example of a configuration of an electronic apparatus 1 according to one embodiment. As illustrated in FIG. 1, the electronic apparatus 1 is a communication terminal of an eyeglass type to be worn on the user's head for use. The electronic apparatus 1 includes temples 10 and 11, lenses 12 and 13, nose pads 14 and 15, a bridge 16, array antennas 20a, 20b, 20c, and 20d, a line-of-sight detection unit 30, a camera 40, and a control circuit 100. Note that FIG. 1 omits power supply lines and the like. Also, an arrangement of the line-of-sight detection unit 30 will be described later.

The temple 10, in a state where the electronic apparatus 1 is worn by the user (hereinafter, also referred to as a "user wearing state"), is positioned on a left side of the user's head. The temple 11 is positioned on a right side of the user's head in the user wearing state. The temple 10 includes a temple tip 10a at an end thereof. The temple 11 includes a temple tip 11a at an end thereof. The temple tip 10a is hooked on the user's left ear in the user wearing state. The temple tip 11a is hooked on the user's right ear in the user wearing state.

The lens 12 has one end coupled to the temple 10 and the other end coupled to the bridge 16. The lens 13 has one end coupled to the temple 11 and the other end coupled to the bridge 16. The lens 12 is positioned in front of the user's left eye in the user wearing state. The lens 13 is positioned in front of the user's right eye in the user wearing state. The lens 12 and the lens 13 respectively include, and are respectively surrounded by, the rim 12a and rim 13a.

The nose pad 14 is provided to a portion of the lens 12 in proximity to the bridge 16. The nose pad 15 is provided to a portion of the lens 13 in proximity to the bridge 16. The nose pad 14 is placed on the left side of the use's nose in the user wearing state. The nose pad 15 is placed on the right side of the use's nose in the user wearing state.

The bridge 16 connects between the lens 12 on the left side and the lens 13 on the right side, thereby maintaining the lenses 12 and 13 in a predetermined positional relationship.

The lens 12 includes the array antenna 20a and the array antenna 20b formed thereon. The lens 13 includes the array antenna 20c and the array antenna 20d formed thereon. Hereinafter, the array antennas 20a, 20b, 20c, and 20d may also be referred to as array antennas 20a to 20d, simply. Each of the array antennas 20a to 20d is formed by printing an antenna pattern on the respective surfaces of the lenses 12 and 13. The array antennas 20a to 20d function as one antenna element. The array antennas 20a to 20d receive power supplied from the control circuit 100.

Note that the array antennas 20a to 20d may be formed one of the surfaces of the lenses 12 and 13 alone. Or, either one of the array antennas 20a to 20d may be formed on one of the surfaces of the lenses 12 and 13, while the other three antennas are formed on the other surface.

The array antennas 20a to 20d may be formed in upper portions of the surfaces of the lenses 12 and 13 as illustrated in FIG. 1, or may be formed on the entire surfaces. Here, the upper portion refers to an upper portion of an upward direction heading from the mouth to the forehead on the user's face. That is, the array antennas 20a to 20d may be arranged in a line on the lens surfaces of the lenses 12 and 13 as illustrated in FIG. 1, or may be arranged otherwise. Also, although the four array antennas 20a to 20d are used in the present embodiment, the number of antennas constituting the array antenna is not limited to four but may be any appropriate number.

Also, although in FIG. 1 each of the array antennas 20a to 20d is configured with one spiral antennas, the number and the shape of the antennas constituting the array antennas 20a to 20d are not limited thereto. For example, the array antenna may include an appropriate combination of a linear portion, a curved portion, and the like. Also, as the antenna pattern, for example, a pattern of a transparent electrode film or a metal foil may be used. In the present embodiment, the pattern of the transparent electrode film is used as the antenna pattern.

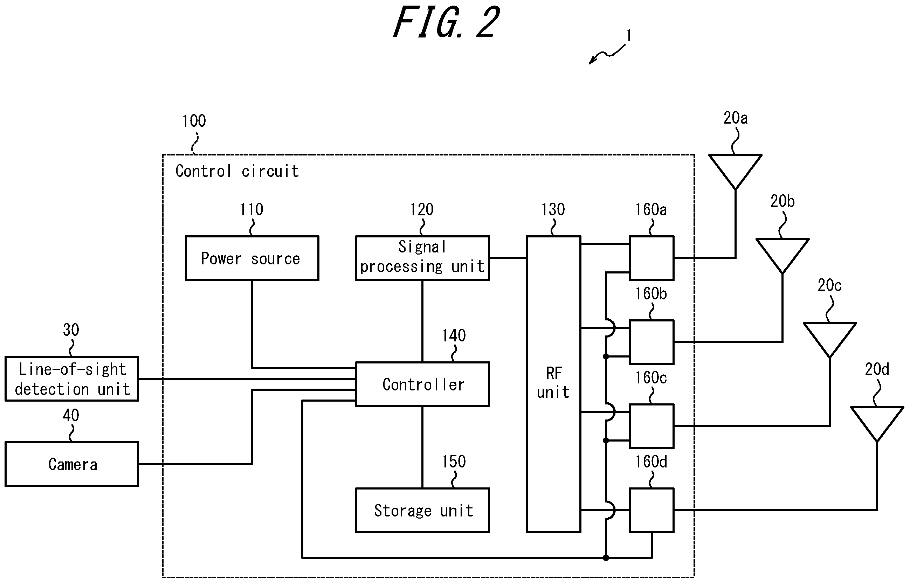

Next, the control circuit 100 of the electronic apparatus illustrated in FIG. 1 will be described with reference to FIG. 2. FIG. 2 illustrates an example of a circuit configuration of the electronic apparatus 1 of one embodiment. The control circuit 100 includes a power source 110, a signal processing unit 120, an RF (Radio Frequency) unit 130, a controller 140, a storage unit 150, and matching circuits 160a, 160b, 160c, and 160d. Hereinafter, the matching circuits 160a, 160b, 160c, and 160d may be also referred to as matching circuits 160a to 160d, simply.

The power source 110 is configured with, for example, a rechargeable secondary battery. The power source 110 supplies power to various elements of the electronic apparatus 1 including the signal processing unit 120, the controller 140, and the storage unit 150. Although an example illustrated in FIG. 2 illustrates connection between the power source 110 and the controller 140 alone for the sake of simplicity of the figure, the power source 110 is actually electrically connected to various elements of the control circuit and supplies power thereto. Also, although in FIG. 2 the power source 110 is included in the control circuit 100, the power source 110 may be arranged in the electronic apparatus 1 separately from the control circuit 100.

The signal processing unit 120 performs synthesis processing and the like on a received signal supplied from the RF unit 130 and outputs a processed received signal to the controller 140. Also, the signal processing unit 120 performs weighing processing and the like on a transmission signal supplied from the controller 140 and outputs a processed transmission signal to the RF unit 130.

The RF unit 130 converts the received signal supplied from the matching circuits 160a to 160d into a signal in a digitally processable frequency band. The RF unit 130 outputs a converted received signal to the signal processing unit 120. Also, the RF unit 130 converts the transmission signal supplied from the signal processing unit 120 into a signal in an RF band. The RF unit 130 outputs a converted transmission signal to the matching circuits 160a to 160d.

The controller 140 controls and manages the electronic apparatus 1 in its entirety and may be configured with, for example, a processor. The controller 140 retrieves and executes a program stored in the storage unit 150, thereby realizing various functions. For example, the controller 140 outputs the transmission signal to the signal processing unit 120. Also, the controller 140 performs various processing by using the reception signal supplied from the signal processing unit 120.

Also, the controller 140, when starting a communication using the array antennas 20a to 20d, instructs the array antennas 20a to 20d to function as adaptive array antennas by controlling the signal processing unit 120 such that the signal processing unit 120 performs the weighing processing and the like. Thereby, the controller 140 controls directivity of the radio waves transmitted and received by the array antennas 20a to 20d.

Also, the controller 140 outputs a control signal to the matching circuits 160a to 160d such that the matching circuits 160a to 160d adjust impedance therein and thus match impedance of the array antennas 20a to 20d to impedance of a circuit constituting the control circuit 100.

Further, the controller 140 is connected to the line-of-sight detection unit 30 and the camera 40. The controller 140 controls the line-of-sight detection unit 30 and the camera 40.

The storage unit 150 stores information necessary for the operation of the controller 140 and a program describing processing for realizing each function of the controller 140. The storage unit 150 also stores an image captured by the camera 40 and information on a user's line-of-sight detected by the line-of-sight detection unit 30.

The matching circuits 160a to 160d are respectively connected to the array antennas 20a to 20d. The matching circuits 160a to 160d adjust the impedance therein according to the control signal from the controller 140 and thus matches the impedance of the array antennas 20a to 20d to the impedance of the circuit constituting the control circuit 100.

Matching the impedance of the array antennas 20a to 20d to the impedance of the circuit constituting the control circuit 100 leads to a reduction in reflection of the received signal from the array antennas 20a to 20d in the control circuit 100 and an increase in intensity of the received signal processed by the controller 140. Note that the impedance in the matching circuits 160a to 160d does not need to be adjustable according to the control signal from the controller 140 but may be fixed.

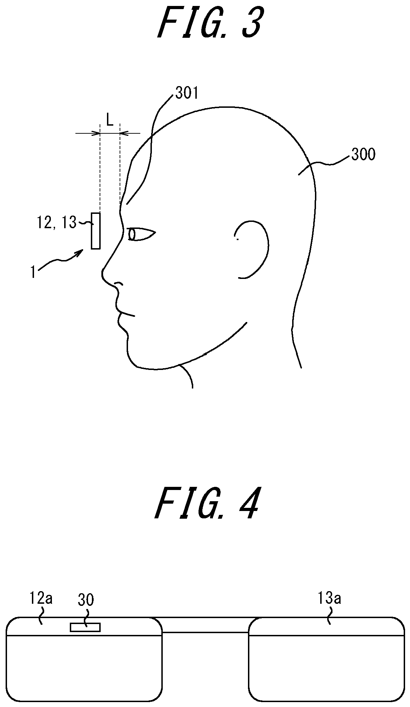

Next, a case in which the electronic apparatus 1 illustrated in FIG. 1 is worn by the user will be described with reference to FIG. 3. FIG. 3 is a conceptual diagram illustrating a state in which the user is wearing the electronic apparatus 1 illustrated in FIG. 1. Note that an example illustrated in FIG. 3, for the sake of simplicity of the figure, simply illustrates a relationship between the lenses 12 and 13 of the electronic apparatus 1 and a user 300, omitting relationships associated with the temples 10 and 11 or the rims 12a and 13a.

As illustrated in FIG. 3, when the electronic apparatus 1 is worn by the user 300, the lenses 12 and 13 of the electronic apparatus 1 are spaced apart from a forehead 301 of the user 300 by a predetermined distance L. The predetermined distance L reduces an influence of SAR on the user 300.

As described above, since the electronic apparatus 1 of the present embodiment has the array antennas 20a to 20d arranged on the lenses 12 and 13 which do not come into a direct contact with the user's head in the user wearing state, the SAR may be reduced. According to the present embodiment, also, since the array antennas 20a to 20d are arranged on the lenses 12 and 13 which do not come into a direct contact with the user's head, interference with the transmission of the radio waves by the user's head may be suppressed, improving performances of the array antennas 20a to 20d associated with transmission and reception of the radio waves.

According to the present embodiment, also, forming the array antennas 20a to 20d by printing the antenna patterns of lightweight may contribute weight reduction of the electronic apparatus 1. Also, since in the present embodiment no member is separately provided for arranging the antennas but, instead, the array antennas 20a to 20d are printed on the lenses 12 and 13, a design of the electronic apparatus 1 may be maintained in an excellent manner. Further, since in the present embodiment the array antennas 20a to 20d are formed by using, for example, the transparent electrode film, the design of the electronic apparatus 1 may be maintained in a further excellent manner.

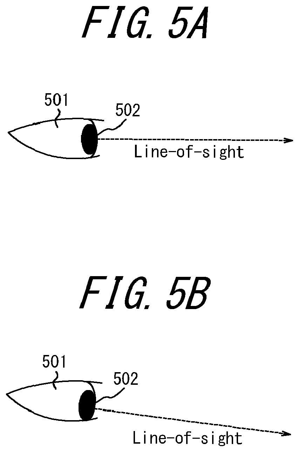

Next, detection of the line-of-sight according to the present embodiment will be described with reference to FIG. 4 and FIGS. 5A and 5B. FIG. 4 is a schematic diagram of the electronic apparatus 1 illustrated in FIG. 1 viewed in a user's line-of-sight direction. FIGS. 5A and 5B are schematic diagrams illustrating a line-of-sight detection technology illustrated in FIG. 1. As illustrated in FIG. 4, the line-of-sight detection unit 30 is formed on the rim 12a. Note that the line-of-sight detection unit 30 may be formed elsewhere including the rim 13a and the bridge 16a.

The line-of-sight detection unit 30 is configured with an infrared camera. The line-of-sight detection unit 30 captures the user's eye with the infrared camera. The controller 140 detects the user's line-of-sight by detecting a movement of the pupil from the image captured by the infrared camera of the line-of-sight detection unit 30.

As illustrated in FIGS. 5A and 5B, for example, the line-of-sight is straight when the user's pupil is positioned in the center, and the line-of-sight directs downward when the user's pupil moves downward. Note that the line-of-sight detection unit 30 may be configured with a normal visible light camera in place of the infrared camera. In this case, the controller 140 detects the user's line-of-sight from, for example, a movement of the iris captured by the camera.

In other words, the line-of-sight detection unit 30 is arranged at a position indicated by an arrow A on a user side of the rim 12a in the user wearing state as illustrated in FIG. 1. The line-of-sight detection unit 30, based on the movement of the user's eye, detects the information on the user's line-of-sight. The information on the user's line-of-sight include, for example, a direction of the user's line-of-sight (hereinafter, referred to as a "user's line-of-sight direction") and a time period during which the user's line-of-sight is maintained in a certain direction (hereinafter, referred to as a "user's sight maintained time period"). The line-of-sight detection unit 30 is configured with an infrared sensor and detects the line-of-sight direction and the like of the user's eye by using the infrared sensor. The line-of-sight detection unit 30 outputs the information on the user's line-of-sight to the controller 140 of the control circuit 100.

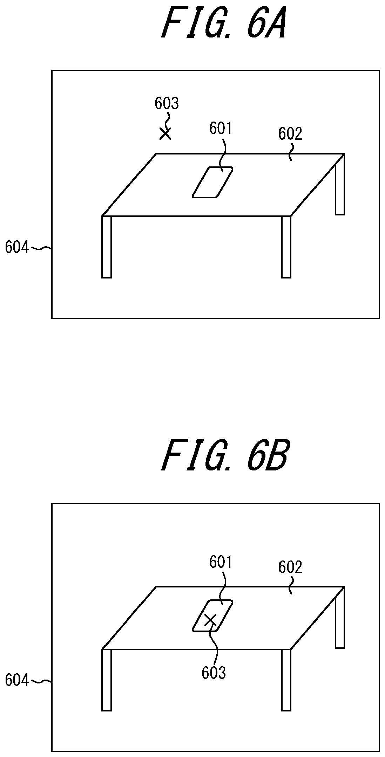

Next, an operation of the camera 40 of the present embodiment will be described with reference to FIGS. 6A and 6B. FIGS. 6A and 6B are conceptual diagrams illustrating the operation of the camera of the electronic apparatus 1 illustrated in FIG. 1.

As illustrated in FIG. 6A, the camera 40 captures an image 604. The image 604 includes a table 602 and a smartphone 601 serving as a communication apparatus placed on the table 602. The controller 140 arranges a user's sight position 603 detected by the line-of-sight detection unit 30 as described above in the image 604.

Then, when the user looks at the smartphone 601, the user's sight position 603 detected by the line-of-sight detection unit 30 as described above is positioned on the smartphone 601 in the image 604.

The camera 40 may capture a still image of a subject or record a video of the subject. The camera 40 outputs a captured image to the control circuit 100. For example, when the electronic apparatus 1 is a wearable terminal, a camera mounted on the wearable terminal may be used as the camera 40.

### Communication Based on Information on User's Line-of-sight

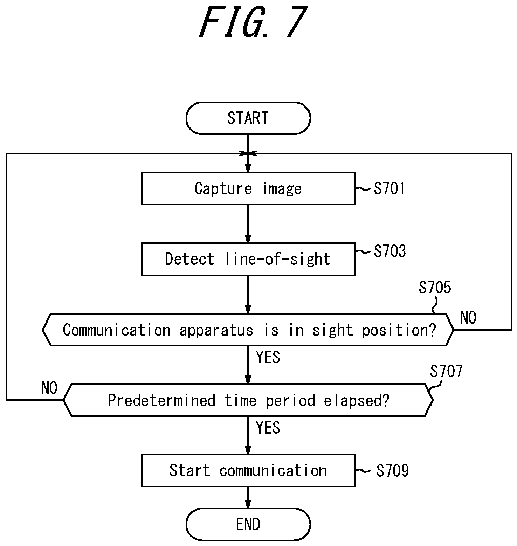

The following is a detailed description of the function of the controller 140 with reference to FIG. 7. FIG. 7 is a flowchart of a communication operation of the electronic apparatus 1 illustrated in FIG. 1 performed based on the information on the user's line-of-sight.

At step S701, the controller 140 instructs the camera 40 to capture the image. For example, the camera 40 may capture sequential images as the video, or capture images at predetermined intervals such as once every 3 seconds. The intervals are not particularly limited but may be appropriately determined. In the present embodiment, the camera 40 records the video.

At step S703, next, the controller 140 instructs the line-of-sight detection unit 30 to capture an image of the user's eye. Then, the controller 140 detects the line-of-sight from the user's eye in the image.

At step S705, then, the controller 140, based on the image captured at step S701 and the user's line-of-sight detected at step S703, detects whether there is a communication apparatus in the sight position in the image. Then, the controller 140 proceeds to step S707 when there is the communication apparatus in the sight position in the image (YES at step S705), or returns to step S701 when there is no communication apparatus in the sight position in the image (NO at step S705).

The controller 140 determines at step S707 whether the sight position in the captured image has been maintained in a position of the communication apparatus for the predetermined time period, i.e., 3 seconds, or longer. When the controller 140 determines at step S707 that the sight position in the captured image has not been maintained in the position of the communication apparatus for the predetermined time period, i.e., 3 seconds, or longer (NO at step S707), the controller 140 returns to step S701. When the controller 140 determines at step S707 that the sight position in the captured image has been maintained in the position of the communication apparatus for the predetermined time period, i.e., 3 seconds, or longer (YES at step S707), the controller 140 proceeds to step S709.

The controller 140, at step S709, starts a communication with the communication apparatus in the position where the sight position in the image has been maintained for the predetermined period, i.e., 3 seconds, or longer.

The controller 140, upon obtainment of the information on the user's line-of-sight from the line-of-sight detection unit 30, starts the communication based on the information on the user's line-of-sight. The controller 140 starts the communication with, for example, another communication apparatus specified by the user's line-of-sight direction included in the information on the user's line-of-sight. The controller 140, when starting the communication via the array antennas 20a to 20d, instructs the array antennas 20a to 20d to function as the adaptive array antennas and thus controls the directivity of the radio waves transmitted and received by the array antennas 20a to 20d.

Also, the controller 140 controls the directivity of the array antennas 20a to 20d in such a manner as to enhance reception sensitivity of the radio waves from the communication apparatus received by the array antennas 20a to 20d.

Note that, when the controller 140 receives information on another communication apparatus from the another communication apparatus itself, the controller 140 may instruct the lenses 12 and 13 of the electronic apparatus 1 to display the information. Here, for example, it is assumed that the user is shopping in a store and looking at a communication apparatus, which is a product sold in the store.

In this case, when the controller 140 receives, from the communication apparatus at an end of the user's line-of-sight, product information of the communication apparatus itself such as a price, a product name, and a description of the product, the controller 140 may instruct the lenses 12 and 13 of the electronic apparatus 1 to display the product information in a manner visible by the user wearing the electronic apparatus 1.

In this way, the user, during the shopping, for example, may observe a design of the communication apparatus at the end of the user's line-of-sight and, simultaneously, obtain the product information and the like of this communication apparatus. Also, since information other than the information on the communication apparatus at the end of the user's line-of-sight (e.g., product information of another communication apparatus elsewhere than the end of the user's line-of-sight) is not displayed in the lenses 12 and 13, obstruction of a user's vision caused by unnecessary information may be prevented. In this case, also, the surfaces of the lenses 12 and 13 may be provided with a transparent liquid crystal panel for displaying information received from the another communication apparatus.

Also, when, for example, the time period during which the user's line-of-sight maintained time period included in the information on the user's line-of-sight exceeds a predetermined time period (e.g., 3 seconds), the controller 140 may turn on power of the communication apparatus specified by the user's line-of-sight direction included in the information on the user's line-of-sight.

Here, for example, it is assumed that the user is at home, and there is a household electrical appliance serving as a communication apparatus such as a TV, a light, and a computer at the end of the user's line-of-sight. In this case, when the user's line-of-sight is maintained on the household electrical appliance serving as the communication apparatus for, for example, 3 seconds, the controller 140 may turn on power of the household electrical appliance at the end of the user's line-of-sight. In this case, the controller 140 may transmit a signal to turn on the power of the communication apparatus specified by the user's line-of-sight direction from the array antennas 20a to 20d.

Although in the present embodiment the array antennas 20a to 20d function as one antenna element, the array antennas 20a to 20d may function as antennas having different functions. For example, the array antennas 20a and 20b may function as transmission antennas, and the array antennas 20c and 20d may function as reception antennas. In this case, the array antennas 20a and 20b for functioning as the transmission antenna may be configured with patch antennas having high directivity, and the array antennas 20c and 20d for functioning as the reception antenna may be configured with omni-directional antennas. By activating, for example, the array antennas 20c and 20d for functioning as the reception antenna at all times and the array antennas 20a and 20b for functioning as the transmission antenna during transmission of the radio waves alone, the electronic apparatus 1 may efficiently perform a communication while reducing power consumption.

Also, although in the present embodiment the line-of-sight detection unit 30 is arranged on the rim 12a, a position of the line-of-sight detection unit 30 is not limited thereto. The line-of-sight detection unit 30 may be arranged on, for example, the rim 13a.

Although in the present embodiment the camera 40 is arranged on the bridge 16, a position of the camera 40 is not limited thereto. The camera 40 may be arranged in, for example, a position on the lens 12 indicated by an arrow B.

Although in the present embodiment the control circuit 100 is arranged in the bridge 16, a position of the control circuit 100 is not limited thereto. The control circuit 100 may be arranged in, for example, the temple 10, the temple 11, or a catch (not illustrated in FIG. 1 but corresponds to a position indicated by the arrow B) between the temple 10 and the lens 12 or between the temple 11 and the lens 13.

As described above, the electronic apparatus 1 according to one embodiment includes the lenses 12 and 13 to be respectively positioned in front of the user's left eye and right eye, and the surface of the lens 12 has the array antennas 20a and 20b printed thereon, while the surface of the lens 13 has the array antennas 20c and 20d printed thereon. Since the array antennas 20a to 20d are arranged on the lenses 12 and 13 which do not come into direct contact with the user's head, the SAR of the radio waves to/from the array antennas 20a to 20d may be reduced.

The electronic apparatus 1 according to one embodiment, also, when starting the communication, instructs the array antennas 20a to 20d to function as the adaptive array antennas and controls the directivity of the array antennas 20a to 20d. Therefore, a communication with another communication apparatus may be maintained in an excellent manner when, for example, the user moves.

Also, the electronic apparatus of the present embodiment detects the user's line-of-sight direction and, based on the line-of-sight, starts a communication with a communication apparatus. Therefore, the electronic apparatus may appropriately communicate with the communication apparatus as desired by the user.

Further, the electronic apparatus of the present embodiment captures an image and, when the captured image includes a communication apparatus, starts a communication with the communication apparatus. Therefore, the electronic apparatus may appropriately communicate with the communication apparatus as desired by the user.

### Variation 1

Next, Variation 1 of the embodiment of the electronic apparatus will be described. Although in the above embodiment the communication is started when the user's line-of-sight is maintained on the communication apparatus for the predetermined time period or longer, the electronic apparatus of the disclosure is not limited thereto. The following Variation 1 is an embodiment in which the electronic apparatus starts the communication when the image captured by the camera includes a communication apparatus.

The controller 140, after obtaining an image from the camera 40, starts a communication with another communication apparatus based on the image. That is, the controller 140 analyzes the image and, when confirming that there is a communication apparatus, starts the communication. Here, the controller analyzes the image by employing, for example, a known technology for extracting a quantity of feature in the image.

Then, the controller 140 starts a communication with the another communication apparatus captured in the image. When starting the communication via the array antennas 20a to 20d, the controller 140 instructs the array antennas 20a to 20d to function as the adaptive array antennas and thus controls the directivity of the radio waves transmitted and received by the array antennas 20a to 20d.

It is now assumed that a communication apparatus is included in the image captured by the camera 40. In this case, the controller 140 starts a communication with the communication apparatus in the image. When starting the communication with the communication apparatus, the controller 140 instructs the array antennas 20a to 20d to function as the adaptive array antennas similarly to the manner described above and controls the directivity of the radio waves transmitted and received by the array antennas 20a to 20d.

Also, when the image obtained from the camera 40 includes a plurality of communication apparatuses, the controller 140 may allow the user to select the communication apparatus to communicate with. In this case, the electronic apparatus 1 may be equipped with an input unit for receiving a user input.

In this way, the Variation 1 may obtain an effect similar to the effect of the above embodiment of the electronic apparatus 1.

### Variation 2

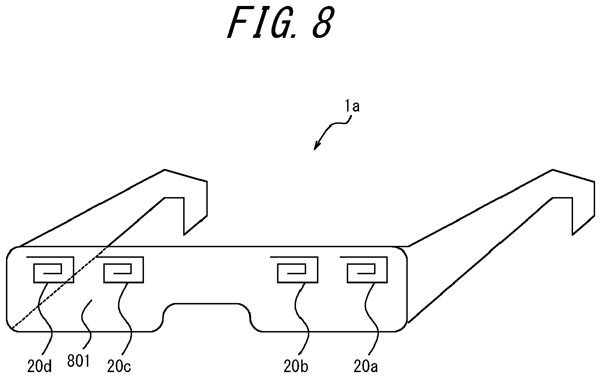

Next, an electronic apparatus according to Variation 2 of the embodiment of the electronic apparatus will be described with reference to FIG. 8. FIG. 8 is a perspective view illustrating a configuration of the electronic apparatus according to the Variation 2 of the embodiment of the electronic apparatus. Since the electronic apparatus according to the Variation 2 is configured similarly to the electronic apparatus illustrated in FIG. 1 other than structures of the lenses 12 and 13, such different features alone will be described.

As illustrated in FIG. 8, an electronic apparatus 1a according to the Variation 2 has an integrated lens 801 in place of the lenses 12 and 13 of the embodiment illustrated in FIG. 1 which are separated from each other for the left eye and the right eye, respectively. Note that a shape of the lens 801 is not limited to the shape illustrated in FIG. 8 but may vary appropriately.

The electronic apparatus 1a of the Variation 2, similarly to the electronic apparatus illustrated in FIG. 1, includes the array antennas 20a to 20d.

In this way, the Variation 2 may obtain an effect similar to the effect of the embodiment of the electronic apparatus 1 described above.

Note that the above embodiment and the Variations may be combined in any manner within a range avoiding inconsistency For example, the feature of the electronic apparatus of the Variation 1 and the feature of the electronic apparatus of the Variation 2 may be combined in an appropriate manner.

Although the disclosure has been described based on the figures and the embodiment, it is to be understood that various modifications and changes may be implemented based on the disclosure by those who are ordinarily skilled in the art. Accordingly, such modifications and changes are included in the scope of the disclosure. For example, functions and the like included in each constituent and step may be rearranged without logical inconsistency, so as to combine a plurality of constituents or steps together or to separate them. It should also be understood that, although the apparatus has been mainly described above, a method or a program executed by a processor of the apparatus and a storage medium storing the program may also implement the disclosure and thus are included in the scope of the disclosure.

## Claims

1. An electronic apparatus to be worn on the user's head for use, the electronic apparatus comprising:
a lens positioned in front of the user's eye when the electronic device is worn on the user's head; and
an array antenna configured with a plurality of antennas formed on a surface of the lens.

2. The electronic apparatus according to claim 1, further comprising a controller for controlling the array antenna, wherein
the controller instructs the array antenna to function as an adaptive antenna.

3. The electronic apparatus according to claim 1, further comprising a line-of-sight detection unit for detecting information on a user's line-of-sight and a controller, wherein
the controller, based on the information on the user's line-of-sight, starts a communication with another communication apparatus by using a signal output from the antenna.

4. The electronic apparatus according to claim 3, further comprising a camera for capturing an image, wherein
the controller, when a user's line-of-sight position detected by the line-of-sight detection unit is maintained on another communication apparatus in the image captured by the camera for a predetermined time period or longer, starts a communication with the another communication apparatus.

5. The electronic apparatus according to claim 1, further comprising a camera for capturing an image and a controller, wherein
the controller starts a communication with another communication apparatus in the image captured by the camera.
